# EUROPÄISCHE PATENTSCHRIFT

(11) **EP 1 818 126 B1**
(45) Veröffentlichungstag und Bekanntmachung des Hinweises auf die Patenterteilung: **08.10.2008**
(21) Anmeldenummer: 07405029.5
(22) Anmeldetag: 02.02.2007
(51) Int. Cl.: B23D 15/06, B23D 19/04, B23D 31/02

(54) **Blechbearbeitungsmaschine**
Sheet metal working machine
Machine de traitement de tôle

(30) Priorität: 08.02.2006 CH 1972006
(43) Veröffentlichungstag der Anmeldung: 15.08.2007
(73) Patentinhaber: MABI AG, 5106 Veltheim (CH)
(72) Erfinder: Biland, Max, 5106 Veltheim (CH)
(74) Vertreter: Groner, Manfred

(56) Entgegenhaltungen:
- EP-A1- 1 074 324
- CH-A5- 689 689

## Beschreibung

Die Erfindung betrifft eine Blechbearbeitungsmaschine mit einem Maschinengestell, an dem eine Schneideinrichtung gelagert ist, die quer zur Transportrichtung des Bleches verfahrbar ist und mit einer Transportvorrichtung zum Transportieren des Bleches.

Blechbearbeitungsmaschinen sind seit langem bekannt. Sie dienen beispielsweise zum Zuschneiden von dünnen Blechformen, wie sie beispielsweise zum Herstellen von Isolierverschalungen benötigt werden. Die hierfür benötigten Zuschnitte können sehr unterschiedlich sein und beispielsweise Bögen, Kalotten, Stutzen, Konusformen und dergleichen sein. Zum Ausschneiden dieser Zuschnitte aus einem Blech wird das Blech programmgesteuert vorwärts und rückwärts bewegt. Gleichzeitig wird die Schneideinrichtung quer zur Transportrichtung des Bleches hin- und herverfahren. Die Zuschnitte können in der Regel mit einem Stanzwerkzeug mit Lochstanzungen versehen werden.

Eine Blechbearbeitungsmaschine der genannten Gattung ist beispielsweise aus der ch-a-689 689 des Anmelders bekannt geworden. Bei dieser weist die Schneideinrichtung zwei rotierende Schneidmesser auf, die mit einem ersten Antrieb ausgerichtet und mit einem zweiten Antrieb angetrieben sind. Eine ähnliche Blechbearbeitungsmaschine ist aus der EP-A-0 620 072 des Anmelder bekannt geworden.

Die EP 1 074 324 des Anmelders offenbart eine Blechbearbeitungsmaschine, bei welcher die Schneideinrichtung zwei oszillierende Messer aufweist. Weitere Blechbearbeitungsmaschinen sind aus der EP-A-1 422 006 und der CH-A-687 510 bekannt geworden.

Durch geeignete Programmsteuerung wird seit langem angestrebt, den Abfall beim Schneiden und Bearbeiten von Dünnblechen möglichst klein zu halten.

Der Erfindung liegt die Aufgabe zugrunde, eine Blechbearbeitungsmaschine der genannten Art zu schaffen, die es ermöglicht, den Verschnitt bzw. den Abfall ohne wesentlichen höheren Zeitaufwand zu minimieren.

Die Aufgabe ist bei einer gattungsgemässen Blechbearbeitungsmaschine gemäss Anspruch 1 gelöst. Bei der erfindungsgemässen Blechbearbeitungsmaschine können die beiden genannten Schneidvorrichtungen optimal auf das Schneiden unterschiedlicher Zuschnitte ausgelegt werden. Mit einer ersten Schneidvorrichtung werden beispielsweise die grösseren Zuschnitte, beispielsweise grosse Scheiben ausgeschnitten und mit der zweiten Schneidvorrichtung werden dann innenliegend kleinere Zuschnitte ausgeschnitten. Wesentlich ist, dass zusätzlich zur Verminderung des Abfalls der Zeitaufwand nicht grösser ist.

Der Abfall kann dann besonders klein gehalten werden, wenn gemäss einer Weiterbildung der Erfindung eine erste Schneidvorrichtung Rollenmesser und eine zweite Schneidvorrichtung Stösselmesser aufweist. Mit dem Rollenmesser können aus dem Blech vor allem grössere Zuschnitte ausgeschnitten werden. Mit dem Stösselmesser können dann kleiner Zuschnitte an beliebiger Stelle ausgeschnitten werden.

Nach der Erfindung ist vorgesehen, dass die beiden Schneidvorrichtungen einen gemeinsamen Antrieb zum Ausrichten der Messer aufweisen. Damit ist eine besonders kompakte und einfache Ausführung möglich. Es hat sich zudem gezeigt, dass dadurch die Steuerung und insbesondere die Programme vergleichsweise einfacher sein können.

Nach einer Weiterbildung der Erfindung ist ein Antrieb für die Ausrichtung der beiden Schneidvorrichtungen im Wesentlichen in der Mitte zwischen diesen beiden Schneidvorrichtungen angeordnet. Dies ermöglicht eine besonders platzsparende Anordnung.

Nach einer Weiterbildung der Erfindung ist vorgesehen, dass die Blechtransportvorrichtung zwei im Abstand zueinander angeordnete Walzenpaare aufweist, die jeweils über einen Antrieb und insbesondere über einen Servoantrieb angetrieben sind. Dies ergibt eine sehr stabile Klemmung und genaue Positionierung des Bleches.

Nach einer Weiterbildung der Erfindung ist vorgesehen, dass die genannten beiden Walzenpaare jeweils eine Gummiwelle aufweisen. Es hat sich gezeigt, dass dadurch der Schlupf des Bleches wesentlich verringert werden kann. Insbesondere sind die beiden Gummiwellen gemeinsam über einen Antrieb angetrieben.

Nach einer Weiterbildung der Erfindung ist vorgesehen, dass ausser den genannten beiden Schneidvorrichtungen eine weitere Bearbeitungsvorrichtung, beispielsweise eine Stanzvorrichtung und/oder eine Sickenvorrichtung vorgesehen ist bzw. sind.

Die Erfindung betrifft zudem ein Verfahren zum Bearbeiten von Blechen uns insbesondere Dünnblechen.

Weitere vorteilhafte Merkmale ergeben sich aus den abhängigen Patentansprüchen, der nachfolgenden Beschreibung sowie der Zeichnung.

Ein Ausführungsbeispiel der Erfindung wird nachfolgend anhand der Zeichnung näher erläutert. Es zeigen:
- Figur 1: schematisch eine räumliche Ansicht einer erfindungsgemässen Blechbearbeitungsmaschine,
- Figur 2: schematisch ein vertikaler Schnitt durch die Blechbearbeitungsmaschine gemäss Figur 1,
- Figur 3: ein Schnitt entlang der Linie III-III der Figur 2,
- Figur 4: schematisch ein Teilschnitt durch eine Stanzvorrichtung,
- Figur 5: schematisch ein Schnitt durch zwei Rollenmesser,
- Figur 6: schematisch ein Teilschnitt durch Stösselmesser und
- Figur 7: schematisch teilweise geschnittene Sickenrollen.

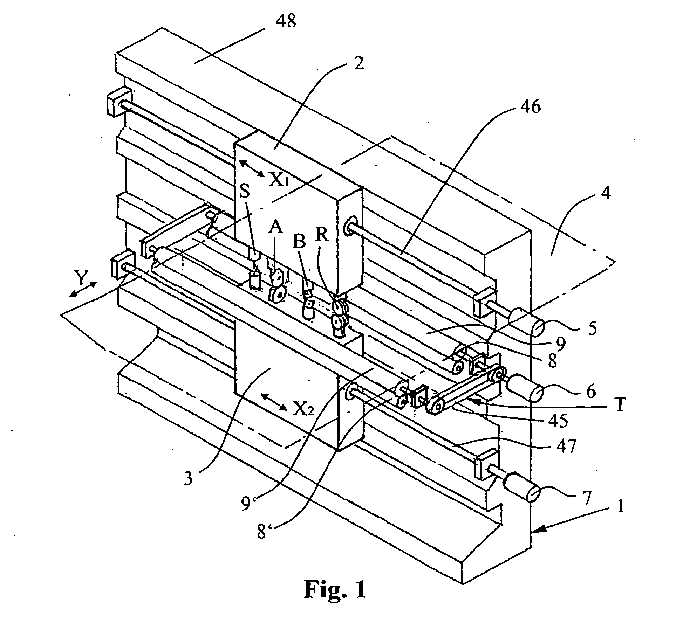

Die Blechbearbeitungsmaschine 1 besitzt gemäss Figur 1 ein Maschinengestell 48, das für den Transport von Blech 4 und insbesondere Dünnblech eine Transportvorrichtung 10 aufweist, mit der das Blech 4 vor- und rückwärts in der Y-Richtung bewegbar ist. Diese Bewegung erfolgt programmgesteuert mit einer hier nicht gezeigten geeigneten Steuervorrichtung. Mit der Blechbearbeitungsmaschine 1 ist dieses Blech 4 bearbeitbar, insbesondere kann dieses geschnitten und vorzugsweise wahlweise auch gestanzt und/oder mit Sicken versehen werden. Insbesondere können mit der Blechbearbeitungsmaschine 1 Teile für Isolierverschalungen hergestellt werden, es können aber grundsätzlich auch andere Blechteile hergestellt werden.

Die Transportvorrichtung T besitzt zwei im Abstand zueinander angeordnete Walzenpaare 8, 9 bzw. 8', 9'. Obere Walzen 9 und 9' sind Gummiwalzen, während die unteren Walzen 8 und 8' Stahlwalzen sind. Das Blech 4 wird zwischen den Walzen 8 und 9 sowie zwischen den Walzen 8' und 9' festgeklemmt. Zwischen den Walzenpaaren 8, 9 und 8' und 9' wird damit ein Abschnitt des Bleches 4 eben und sehr stabil gehalten, so dass das Blech 4 in diesem Abschnitt bzw. zwischen den genannten Walzenpaaren 8, 9 und 8', 9' bearbeitet und insbesondere geschnitten werden kann. Die Walzen 9 und 9' sind mit einem Antrieb 6 und insbesondere einem Servomotor und einem endlosen Antriebsorgan 45 gemeinsam synchron angetrieben. Dies ergibt einen weitgehend schlupffreien Transport des Bleches 4 in Y-Richtung. Insbesondere sind sehr schnelle und genaue Richtungsänderungen möglich. Aufgrund des geringen Schlupfes kann das Blech 4 sehr genau positioniert werden, was entsprechend exakte Bearbeitungsschritte ermöglicht.

Am Maschinengestell 48 sind gemäss Figur 1 ein oberer Schlitten 2 und ein unterer Schlitten 3 synchron in der X-Richtung hin- und herverfahrbar. Der Antrieb erfolgt über einen Antrieb 5, der insbesondere ein Motor und insbesondere ein Servomotor ist und eine Spindelwelle 46 bzw. über einen Antrieb 7 bzw. Servomotor und eine Spindelwelle 47. Die Spindelwellen 46 und 47 können aber auch durch andere geeignete Antriebsorgane, beispielsweise durch Zahnriemen und dergleichen ersetzt sein. Der Schlitten 2 befindet sich über der Ebene des Bleches 4 und der Schlitten 3 unterhalb dieser Ebene. An diesen Schlitten 2 und 3 sind Bearbeitungswerkzeuge und insbesondere eine erste Schneidvorrichtung A, eine zweite Schneidvorrichtung B sowie eine Stanzvorrichtung S und eine Sickenvorrichtung R gelagert. Die Stanzvorrichtung S und die Sickenvorrichtung R sind hier aber nicht zwingend erforderlich und können auch weggelassen werden. Mit diesen Vorrichtungen A, B, S und R kann das Blech 4 bearbeitet und somit insbesondere geschnitten, gestanzt und gesickt werden. Die Arbeitsvorgänge erfolgen jeweils getrennt, es wird somit jeweils geschnitten, gestanzt oder gesickt. Das Schneiden mit den Schneidvorrichtungen A und B erfolgt ebenfalls getrennt. Es wird somit entweder mit der Schneidvorrichtung A oder mit der Schneidvorrichtung B geschnitten.

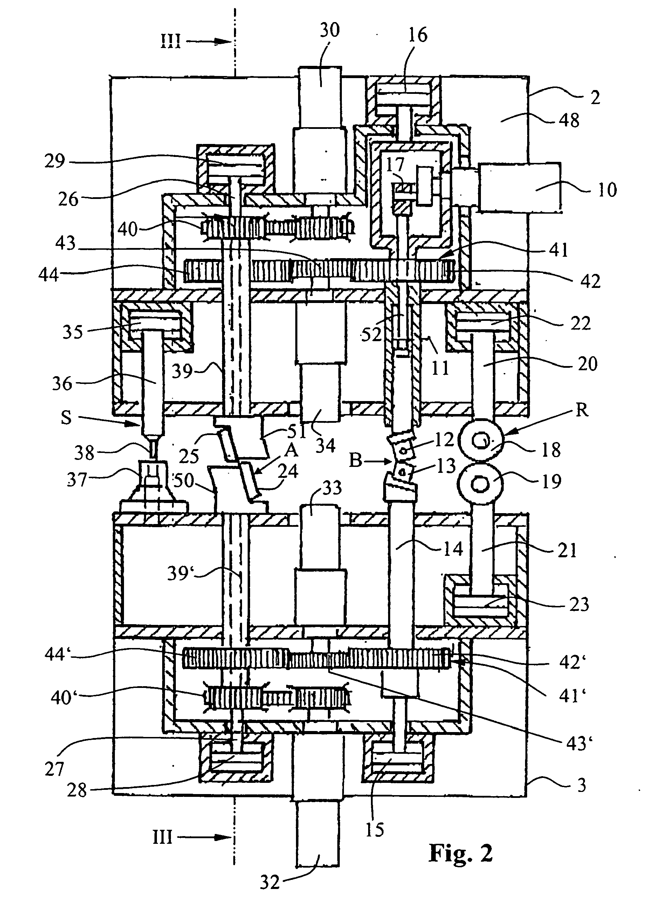

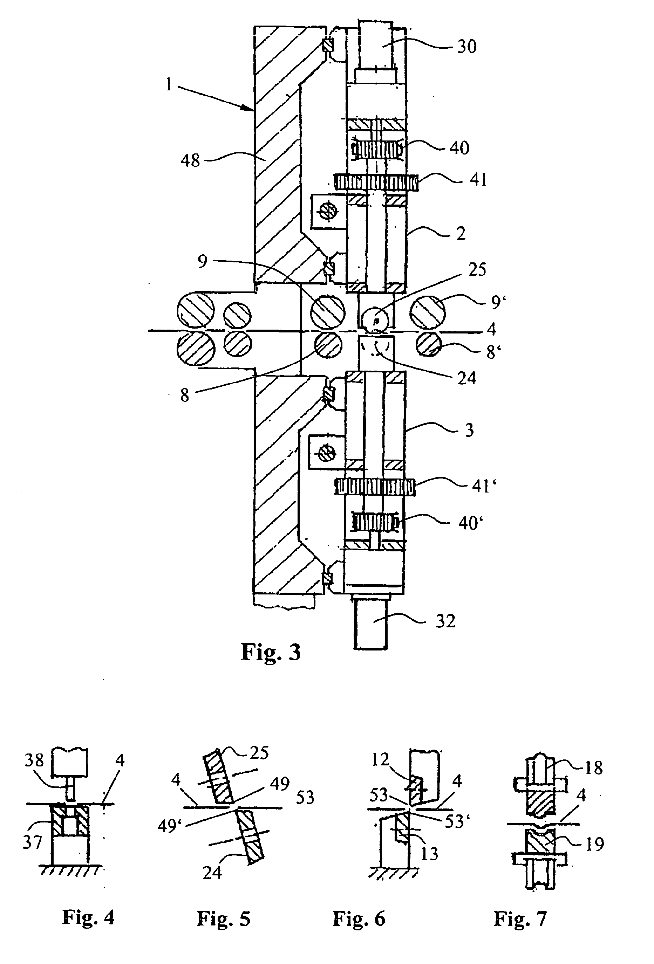

Die erste Schneidvorrichtung A weist gemäss den Figuren 2 und 3 einen unteren Schneidkopf 50 und einen oberen Schneidkopf 51 auf, die zum Schneiden des Bleches 4 in an sich bekannter Weise zusammenwirken. Am unteren Schneidkopf 50 ist ein Rollenmesser 24 gelagert, das mit einem Rollenmesser 25 zusammenarbeitet, das am oberen Schneidkopf 51 gelagert ist. Die beiden Rollenmesser 24 und 25 weisen jeweils eine kreisrunde Schneidkante 49 bzw. 49' auf. Der Antrieb der Rollenmesser 24 und 25 erfolgt über eine Welle 27 bzw. 26 und über hier nicht gezeigte Kegelgetriebe, die im Schneidkopf 50 bzw. 51 angeordnet sind. Es wird hierbei zum Stand der Technik auf die oben genannte EP-A-0 620 072 verwiesen, in welcher geeignete Kegelgetriebe offenbart sind. Über einen unteren Luftzylinder 28 ist die Welle 27 und damit der untere Schneidkopf 50 vertikal und somit in Z-Richtung um einen vergleichsweise kleinen Betrag, beispielsweise wenige Millimeter bewegbar. Ebenso ist die Welle 26 mit einem Luftzylinder 29 vertikal bewegbar. Die beiden Luftzylinder 28 und 29 können auch durch andere geeignete Hubantriebe ersetzt sein. Gedreht wird die untere Welle 27 von einem Antrieb 32, der über ein Zahnradgetriebe 40' auf die Welle 27 wirkt. Die obere Welle 26 wird entsprechend von einem oberen Antrieb 30 und einem oberen Zahnradgetriebe 40 angetrieben. Die Antriebe 30 und 32 besitzen jeweils einen Motor und insbesondere einen Servomotor.

Zum Schneiden müssen die beiden Schneidköpfe 50 und 51 bzw. die Messer 24 und 25 ausgerichtet werden. Dies erfolgt für den unteren Schneidkopf 50 über eine Hohlwelle 39' und für den oberen Schneidkopf 51 über eine Hohlwelle 39. Der Drehantrieb für die Hohlwelle 39' weist einen Antrieb 33 und insbesondere einen Motor, insbesondere einen Synchronmotor auf, der über ein Getriebe 44' und insbesondere ein Zahnradgetriebe mit der Hohlwelle 39' verbunden ist. Für den oberen Schneidkopf 51 ist analog ein Antrieb 34 und ein Getriebe 44 vorgesehen. Mit diesen Drehantrieben ist es möglich, die beiden Schneidköpfe 50 und 51 jeweils programmgesteuert im Bereich von 360° um die vertikale Achse zu drehen.

Der Antrieb 33 wirkt gemäss Figur 2 über ein mittleres Zahnrad 43' auf ein Zahnrad 44', das mit der Hohlwelle 39' verbunden ist. Der Antrieb 34 wirkt entsprechend über ein mittleres Zahnrad 43 auf ein Zahnrad 44, das mit der Hohlwelle 39 verbunden ist.

Mit dem Antrieb 33 bzw. dem Getriebe 41' wird nun gleichzeitig und synchron über eine Hohlwelle 14 ein Stösselmesser 13 und mit dem Antrieb 34 über das Getriebe 41 gleichzeitig und ebenfalls synchron über eine Hohlwelle 11 ein oberes Stösselmesser 12 ausgerichtet. Hierzu wirkt der Antrieb 33 über das Zahnrad 43' und das Zahnrad 42' auf die Hohlwelle 14. Der Antrieb 34 wirkt über das mittlere Zahnrad 43 auf das Zahnrad 42, das fest mit der Hohlwelle 11 verbunden ist. Diese beiden Stösselmesser 12 und 13 besitzen jeweils eine Schneidkante 53 bzw. 53', wie dies in Figur 6 gezeigt ist. Sie bilden die Schneidmittel für eine zweite Schneidvorrichtung B, die im Abstand zur ersten Schneidvorrichtung A an den beiden Schlitten 2 und 3 gelagert ist. Das obere Stösselmesser 12 ist vertikal oszillierend bewegbar. Hierzu ist ein Antrieb 10 und ein Motor und insbesondere ein Synchronmotor vorgesehen, der über einen Exzenter 17 und eine Stange 52 auf das obere Stösselmesser 12 wirkt. Die Umdrehungen des Antriebs 10 liegen im Bereich von beispielsweise 5'000 Umdrehungen pro Minute. Der Hub beträgt beispielsweise 1,8 mm. Das untere Stösselmesser 13 kann mit einem Luftzylinder 15 oder einem anderen geeigneten Hubzylinder vertikal bewegt werden. Diese zweite Schneidvorrichtung B hat den Vorteil, dass mit dem Schnitt an jeder Stelle des Bleches 4 begonnen und auch vergleichsweise kleine Zuschnitte hergestellt werden können. Das obere Stösselmesser 12 ist ebenfalls mit einem Luftzylinder 16 vertikal bewegbar. Der Hub beträgt auch hier beispielsweise wenige Millimeter.

Ein Blech 4 kann somit wahlweise mit der ersten Schneidvorrichtung A oder der zweiten Schneidvorrichtung B geschnitten werden. Beispielsweise werden aus einem Blech 4 mit der ersten Schneidvorrichtung A vergleichsweise grosse Scheiben ausgeschnitten. Die zweite Schneidvorrichtung B ist hierbei inaktiv. Anschliessend werden mit der zweiten Schneidvorrichtung B zur Vermeidung von Abfall möglichst optimal kleinere Zuschnitte ausgeschnitten, wobei hier die erste Schneidvorrichtung A entsprechend inaktiv ist. Grundsätzlich ist es selbstverständlich auch möglich, ein Blech 4 lediglich mit der ersten Schneidvorrichtung A oder lediglich mit der zweiten Schneidvorrichtung B zu bearbeiten.

Ausser den genannten Schneidvorgängen sind auch Stanzvorgänge möglich, beispielsweise für Reihenloch-Stanzungen. Hierzu ist eine Stanzvorrichtung S vorgesehen, die eine Matrize 37 besitzt, welche am unteren Schlitten 3 befestigt ist und die mit einem Stanzwerkzeug 38 zusammenwirkt, das sich am oberen Schlitten 2 befindet. Das Stanzwerkzeug 38 ist an einer Stange 36 befestigt, die mit einem Kolben 35 vertikal bewegbar ist. Der Kolben 35 kann hier in an sich bekannter Weise ein Kolben eines Luftzylinders sein.

Weiter ist zum Herstellen von Sicken im Blech 4 eine Sickenvorrichtung R vorgesehen, die gemäss den Figuren 2 und 7 eine untere Sickenrolle 19 und eine obere Sickenrolle 18 aufweist. Die Sickenrolle 19 ist drehbar am oberen Ende einer Stange 21 gelagert, die mit einem Luftzylinder 23 vertikal bewegbar ist. Entsprechend ist die Rolle 18 an einer Stange 20 drehbar gelagert, die mit einem oberen Luftzylinder 22 vertikal bewegbar ist. Der Aufbau und die Arbeitsweise einer solchen Sickenvorrichtung R ist dem Fachmann bekannt und braucht hier deshalb nicht näher erläutert zu werden.

Nachfolgend wird das Verfahren zum Bearbeiten eines Bleches 4 anhand der Zeichnungen näher erläutert.

Das zu bearbeitende Blech 4 wird beispielsweise mit einer hier nicht gezeigten Vorrichtung von einer Rolle abgezogen und der Blechbearbeitungsmaschine 1 zugeführt, so dass dieses von der Transportvorrichtung T erfasst und in dieser von den Walzenpaaren 8, 9 und 8', 9' festgeklemmt wird. Die Schneidvorrichtungen A und B sowie die Sickenvorrichtung R und S sind durch entsprechende Hubbewegung in eine Position gebracht, in welcher das Blech 4 von diesen nicht erfasst wird. Durch programmgesteuertes Hin- und Herfahren des Bleches 4 in Y-Richtung und Verfahren der beiden Schlitten 2 und 3 in der X-Richtung können nun in einem ersten Schritt mit der ersten Schneidvorrichtung A aus dem Blech 4 erste Zuschnitte ausgeschnitten werden. Zusätzlich zu den Bewegungen des Bleches 4 und der beiden Schlitten 2 und 3 werden die beiden Schneidköpfe 50 und 51 programmgesteuert über die Antriebe 33 und 34 synchron um die vertikale Achse gedreht. Sind nun zur optimalen Ausnutzung des Bleches 4 kleinere Zuschnitte möglich, so werden die beiden Schneidköpfe 50 und 51 ausser Eingriff gebracht und diese kleineren Zuschnitte mit der zweiten Schneidvorrichtung B geschnitten. Hierbei ist es wesentlich, dass mit der zweiten Schneidvorrichtung B an jeder Stelle des Bleches 4 ein Schnitt begonnen werden kann. Zudem kann aufgrund der guten Kurvengängigkeit auch in engen Kurven geschnitten werden. Die Zuschnitte können nun zusätzlich mit der Stanzvorrichtung S und/oder der Sickenvorrichtung R bearbeitet werden. Grundsätzlich ist es auch möglich, zuerst mit dem Stanzen und/oder dem Sicken zu beginnen.

### Bezugszeichenliste

- 1: Blechbearbeitungsmaschine
- 2: Schlitten
- 3: Schlitten
- 4: Blech
- 5: Antrieb
- 6: Antrieb
- 7: Antrieb
- 8: Walze
- 9: Walze
- 10: Antrieb
- 11: Hohlwelle
- 12: Stösselmesser
- 13: Stösselmesser
- 14: Hohlwelle
- 15: Luftzylinder
- 16: Luftzylinder
- 17: Exzenter
- 18: Sickenrolle
- 19: Sickenrolle
- 20: Stange
- 21: Stange
- 22: Luftzylinder
- 23: Luftzylinder
- 24: Rollenmesser
- 25: Rollenmesser
- 26: Welle
- 27: Welle
- 28: Luftzylinder
- 29: Luftzylinder
- 30: Antrieb
- 31: Antrieb
- 32: Antrieb
- 33: Antrieb
- 34: Antrieb
- 35: Kolben
- 36: Stange
- 37: Matrize
- 38: Stanzwerkzeug
- 39: Hohlwelle
- 40: Getriebe
- 41: Getriebe
- 42: Zahnrad
- 43: Zahnrad
- 44: Zahnrad
- 45: Antriebsorgan
- 46: Spindelwelle
- 47: Spindelwelle
- 48: Maschinengestell
- 49: Schneidkante
- 50: Schneidkopf
- 51: Schneidkopf
- 52: Stange
- 53: Schneidkanal
- A: erste Schneidvorrichtung
- B: zweite Schneidvorrichtung
- R: Sickenvorrichtung
- S: Stanzvorrichtung
- T: Transportvorrichtung

## Patentansprüche

1. Blechbearbeitungsmaschine mit einem Maschinengestell (48), an dem eine Schneideinrichtung gelagert ist, die quer zur Transportrichtung (Y) des Bleches (4) verfahrbar ist und mit einer Transportvorrichtung (T) zum Transportieren des Bleches (4), **dadurch gekennzeichnet, dass** die Schneideinrichtung zwei Schneidvorrichtungen (A, B) mit jeweils unterschiedlichen Messern (24, 25; 12, 13) aufweist, mit denen das Blech (4) wahlweise schneidbar ist, wobei die beiden Schneidvorrichtungen (A, B) einen gemeinsamen Antrieb (33, 34) zum Ausrichten der Messer (24, 25; 12, 13) aufweisen.

2. Blechbearbeitungsmaschine nach Anspruch 1, **dadurch gekennzeichnet, dass** eine erste Schneidvorrichtung (A) Rollenmesser (24, 25) und eine zweite Schneidvorrichtung (B) Stösselmesser (12, 13) aufweist.

3. Blechbearbeitungsmaschine nach Anspruch 2, **dadurch gekennzeichnet, dass** der gemeinsame Antrieb ein oberes Getriebe (41) und ein unteres Getriebe (41') aufweist.

4. Blechbearbeitungsmaschine nach Anspruch 1, **dadurch gekennzeichnet, dass** der gemeinsame Antrieb (33, 34) im Wesentlichen mittig zwischen den beiden Schneidvorrichtungen (A, B) angeordnet ist.

5. Blechbearbeitungsmaschine nach einem der Ansprüche 1 bis 4, **dadurch gekennzeichnet, dass** der gemeinsame Antrieb ein oberes Getriebe (41) und ein unteres Getriebe (41') aufweist, wobei diese beiden Getriebe (41, 41') Zahnradgetriebe sind.

6. Blechbearbeitungsmaschine nach einem der Ansprüche 1 bis 5, **dadurch gekennzeichnet, dass** der gemeinsame Antrieb einen oberen Motor (34) und insbesondere einen Synchronmotor und einen unteren Motor (33), insbesondere einen Synchronmotor aufweist, wobei diese beiden Motoren (33, 34) jeweils über ein Getriebe (41, 41') mit der ersten Schneidvorrichtung (A) und der zweiten Schneidvorrichtung (B) verbunden sind.

7. Blechbearbeitungsmaschine nach einem der Ansprüche 1 bis 6, **dadurch gekennzeichnet, dass** sie einen oberen Schlitten (2) sowie einen unteren Schlitten (3) aufweist, wobei am oberen Schlitten (2) jeweils ein Schneidorgan (25) der ersten Schneidvorrichtung (A) und ein Schneidelement (12) der zweiten Schneidvorrichtung (B) und am unteren Schlitten (3) ein Schneidelement (24) der ersten Schneidvorrichtung (A) und ein Schneidelement (13) der zweiten Schneidvorrichtung (B) gelagert sind.

8. Blechbearbeitungsmaschine nach einem der Ansprüche 1 bis 7, **dadurch gekennzeichnet, dass** die Transportvorrichtung (T) zwei Walzenpaare (8, 9; 8', 9') aufweist, die gemeinsam von einem Antrieb (6, 45) angetrieben sind.

9. Blechbearbeitungsmaschine nach Anspruch 8, **dadurch gekennzeichnet, dass** die beiden Walzenpaare (8. 9; 8', 9') von einem Motor und insbesondere einem Servomotor (6) angetrieben sind.

10. Blechbearbeitungsmaschine nach Anspruch 8 oder 9, **dadurch gekennzeichnet, dass** wenigstens ein Walzenpaar (8, 9; 8' 9') eine Gummiwalze (9, 9') aufweist.

11. Verfahren zum Bearbeiten von Blech (4) mit einer Blechbearbeitungsmaschine gemäss Anspruch 1, **dadurch gekennzeichnet, dass** mit einer der beiden Schneidvorrichtungen (A, B) erste Zuschnitte ausgeschnitten werden und dass mit der anderen der beiden Schneidvorrichtungen (B, A) weitere Zuschnitte ausgeschnitten werden.

12. Verfahren nach Anspruch 11, **dadurch gekennzeichnet, dass** erste Zuschnitte mit Rollenmessern (24, 25) und weitere Zuschnitte mit Stösselmessern (12, 13) ausgeschnitten werden.

## Claims

1. Sheet metal working machine comprising a machine frame (48) on which is mounted a cutting appliance that can be moved transversely relative to the transport direction (Y) of the sheet metal (4), and comprising a transport device (T) for transporting the sheet metal (4), **characterized in that** the cutting appliance has two cutting devices (A, B) having respectively differing blades (24, 25; 12, 13) by means of which the sheet metal (4) can be optionally cut, the two cutting devices (A, B) having a common drive (33, 34) for aligning the blades (24, 25; 12, 13).

2. Sheet metal working machine according to Claim 1, **characterized in that** a first cutting device (A) has roller blades (24, 25) and a second cutting device (B) has ram blades (12, 13).

3. Sheet metal working machine according to Claim 2, **characterized in that** the common drive has an upper transmission (41) and a lower transmission (41').

4. Sheet metal working machine according to Claim 1, **characterized in that** the common drive (33, 34) is arranged substantially centrally between the two cutting devices (A, B).

5. Sheet metal working machine according to any one of Claims 1 to 4 , **characterized in that** the common drive has an upper transmission (41) and a lower transmission (41'), these two transmissions (41, 41') being toothed gear transmissions.

6. Sheet metal working machine according to any one of Claims 1 to 5, **characterized in that** the common drive has an upper motor (34), and in particular a synchronous motor, and a lower motor (33), in particular a synchronous motor, these two motors (33, 34) being respectively connected via a transmission (41, 41') to the first cutting device (A) and the second cutting device (B).

7. Sheet metal working machine according to any one of Claims 1 to 6, **characterized in that** it has an upper carriage (2) and a lower carriage (3), there being mounted on the upper carriage (2), respectively, a cutting organ (25) of the first cutting device (A) and a cutting element (12) of the second cutting device (B) and on the lower carriage (3) a cutting element (24) of the first cutting device (A) and a cutting element (13) of the second cutting device (B).

8. Sheet metal working machine according to any one of Claims 1 to 7, **characterized in that** the transport device (T) has two cylinder pairs (8, 9; 8', 9'), which are driven jointly by a drive (6, 45).

9. Sheet metal working machine according to Claim 8, **characterized in that** the two cylinder pairs (8, 9; 8', 9') are driven by a motor, and in particular by a servo motor (6).

10. Sheet metal working machine according to either of Claims 8 or 9, **characterized in that** at least one cylinder pair (8, 9; 8', 9') has a rubber roller (9, 9').

11. Method for working sheet metal (4) by means of a sheet metal working machine according to Claim 1, **characterized in that** first cuttings are cut out by means of one of the two cutting devices (A, B), and **in that** further cuttings are cut out by means of the other of the two cutting devices (B, A).

12. Method according to Claim 11, **characterized in that** first cuttings are cut out by means of roller blades (24, 25), and further cuttings are cut out by means of ram blades (12, 13).

## Revendications

1. Machine de traitement de tôle comprenant un bâti de machine (48) sur lequel est monté un système de coupe, qui peut être déplacé transversalement à la direction de transport (Y) de la tôle (4), et comprenant un dispositif de transport (T) pour transporter la tôle (4), **caractérisée en ce que** le système de coupe présente deux dispositifs de coupe (A, B) comprenant chacun différentes lames (24, 25 ; 12, 13), avec lesquelles la tôle (4) peut être découpée de manière sélective, les deux dispositifs de coupe (A, B) présentant un entraînement commun (33, 34) pour orienter les lames (24, 25 ; 12, 13).

2. Machine de traitement de tôle selon la revendication 1, **caractérisée en ce qu'**un premier dispositif de coupe (A) présente des lames rotatives (24, 25) et un deuxième dispositif de coupe (B) présente des lames percutantes (12, 13).

3. Machine de traitement de tôle selon la revendication 2, **caractérisée en ce que** l'entraînement commun présente un engrenage supérieur (41) et un engrenage inférieur (41').

4. Machine de traitement de tôle selon la revendication 1, **caractérisée en ce que** l'entraînement commun (33, 34) est disposé sensiblement au centre entre les deux dispositifs de coupe (A, B).

5. Machine de traitement de tôle selon l'une quelconque des revendications 1 à 4, **caractérisée en ce que** l'entraînement commun présente un engrenage supérieur (41) et un engrenage inférieur (41'), ces deux engrenages (41, 41') étant des engrenages à roues dentées.

6. Machine de traitement de tôle selon l'une quelconque des revendications 1 à 5, **caractérisée en ce que** l'entraînement commun présente un moteur supérieur (34) et en particulier un moteur synchrone, et un moteur inférieur (33), en particulier un moteur synchrone, ces deux moteurs (33, 34) étant connectés à chaque fois par le biais d'un engrenage (41, 41') au premier dispositif de coupe (A) et au deuxième dispositif de coupe (B).

7. Machine de traitement de tôle selon l'une quelconque des revendications 1 à 6, **caractérisée en ce qu'**elle présente un chariot supérieur (2) et un chariot inférieur (3), à chaque fois un organe de coupe (25) du premier dispositif de coupe (A) et un élément de coupe (12) du deuxième dispositif de coupe (B) étant montés sur le chariot supérieur (2), et un élément de coupe (24) du premier dispositif de coupe (A) et un élément de coupe (13) du deuxième dispositif de coupe (B) étant montés sur le chariot inférieur (3).

8. Machine de traitement de tôle selon l'une quelconque des revendications 1 à 7, **caractérisée en ce que** le dispositif de transport (T) présente deux paires de cylindres (8, 9 ; 8', 9') qui sont entraînées conjointement par un entraînement (6, 45).

9. Machine de traitement de tôle selon la revendication 8, **caractérisée en ce que** les deux paires de cylindres (8, 9 ; 8', 9') sont entraînées par un moteur et en particulier un servomoteur (6).

10. Machine de traitement de tôle selon la revendication 8 ou 9, **caractérisée en ce qu'**au moins une paire de cylindres (8, 9 ; 8', 9') présente un cylindre en caoutchouc (9, 9').

11. Procédé de traitement de tôle (4) comprenant une machine de traitement de tôle selon la revendication 1, **caractérisé en ce que** des premières pièces découpées sont découpées avec l'un des deux dispositifs de coupe (A, B), et **en ce que** d'autres pièces découpées sont découpées avec l'autre des deux dispositifs de coupe (A, B).

12. Procédé selon la revendication 11, **caractérisé en ce que** des premières pièces découpées sont découpées avec des lames rotatives (24, 25), et d'autres pièces découpées sont découpées avec des lames percutantes (12, 13) .
